# EUROPEAN PATENT SPECIFICATION

(11) **EP 1 444 931 B1**
(45) Date of publication and mention of the grant of the patent: **22.02.2006**
(21) Application number: 02769860.4
(22) Date of filing: 15.10.2002
(51) Int. Cl.: A47J 31/10, A47J 31/057, A47J 31/44

(54) **COFFEE MACHINE**
KAFFEEMASCHINE
CAFETIERE

(30) Priority: 15.10.2001 CN 01267646
(43) Date of publication of application: 11.08.2004
(73) Proprietor: Princess Worldwide, Ltd., Hong Kong (CN)
(72) Inventor: LOU, Beeren, Unit 1603, 16th Floor, TST, KLN, Hong Kong, Hong Kong (CN)
(74) Representative: Hengelhaupt, Jürgen
(86) International application number: PCT/CN2002/000725
(87) International publication number: WO 2003/032791

(56) References cited:
- WO-A-98/58577
- CN-A- 1 216 453
- CN-Y- 2 176 341
- DE-A- 2 658 265
- DE-A- 3 014 493
- US-A- 5 687 636
- US-A- 5 943 945

## Description

### Technical Field

The invention relates to a coffee maker.

### Background Art

Coffee makers are commonly used utensils. In most families, the coffee maker is generally placed on a tabletop or a water skip. Since the water skip is a working area, any inappropriate placement of articles would affect its normal use. On the other hand, people would like to put the coffee maker in a position which makes the coffee maker be accessible easily. However, because of the limitation of the profile of the traditional coffee maker, once the coffee maker need to be placed on the water skip, it would interfere with using the water skip. Nevertheless, it would cause the inconvenience of using the coffee maker if the coffee maker is placed in other positions. The requirements for the position of the coffee maker tend to be paradoxical. The paradox just results from the shortages of the profile of traditional coffee makers.

Various improvements to the coffee maker were made, for instance, a heater in coffee makers disclosed in Chinese utility model patent No. 98209025.0, but the object of the Chinese patent was just to improve the efficiency of thermal conduction during the usage of the coffee maker so as to cost less time to make coffee. The Chinese patent is not to improve the profile of the coffee maker.

A further coffee maker is known from US-A 5,943,945, but it has the same limitations of the profile.

### Contents of the Invention

The object of the invention is to provide a coffee maker, which overcomes the above-mentioned shortages in the prior art.
A coffee maker according to the invention comprises a base, a water-heating container, a coffee filter casing and a coffeepot; wherein a heater is provided on the base; the coffeepot is placed on the heater; the water-heating container is fixed erectly on a side of the base; the coffee filter casing is arranged above the coffeepot and pivotedly mounted on a side of the water-heating container by a fixed side; the water-heating container is communicated with the coffee filter casing via a steam conduit; a coffee stop-dropping mechanism is located on the bottom of the coffee filter casing; an inlet for receiving coffee droplet is set on a pot lid of the coffeepot; being characterized in that, from the top view, the profile of the coffee maker is a sector shape with a center angle of 90° witch is formed by two back surfaces of the coffee maker, and the water-heating container is located at a right-angled end portion of the sector.

For supplying water into the water-heating container easily a separable container is provided on the top of the water-heating container. An intake is provided on the top of the water-heating container and a water valve is located on the bottom of the separable container at a position corresponding to said intake. Therefore, even if the coffee maker is arranged at a corner, maybe exactly under the wall cupboard, it is still convenient to supply the required amount of water into the water-heating container. Compared with the traditional mode of supplying water into the coffee maker by a glass pot, not only the coffee maker is more convenient and hygienic, but also water supplement to the coffee maker can be controlled more easily.

Furthermore, a handle may be provided on the separable container, so that during the procedure of supplying water into the water-heating container the separable container can be taken down easily and be put under the faucet, and then put back on the coffee maker.

A water level observing window is installed on a side of the above-mentioned water-heating container so as to visually indicate the amount of residual water in the water-heating container.

In like manner, a scale for the amount of water is marked on the separable container so as to exactly determine the required supplement amount of water.

The preferred embodiments of the invention will be described with reference to the accompanying drawings. However, the description of the preferred embodiments is to help understand, not to limit the protection scope of the invention.

### Brief Description of Drawings

Fig. 1 schematically shows the vertical section view of the coffee maker;
Fig. 2 shows the front view of the coffee maker;
Fig. 3 shows the side view of the coffee maker;
Fig. 4 shows the upward view of the coffee maker;
Fig. 5 shows the top view of the coffee maker.

### Description of the Preferred Embodiment

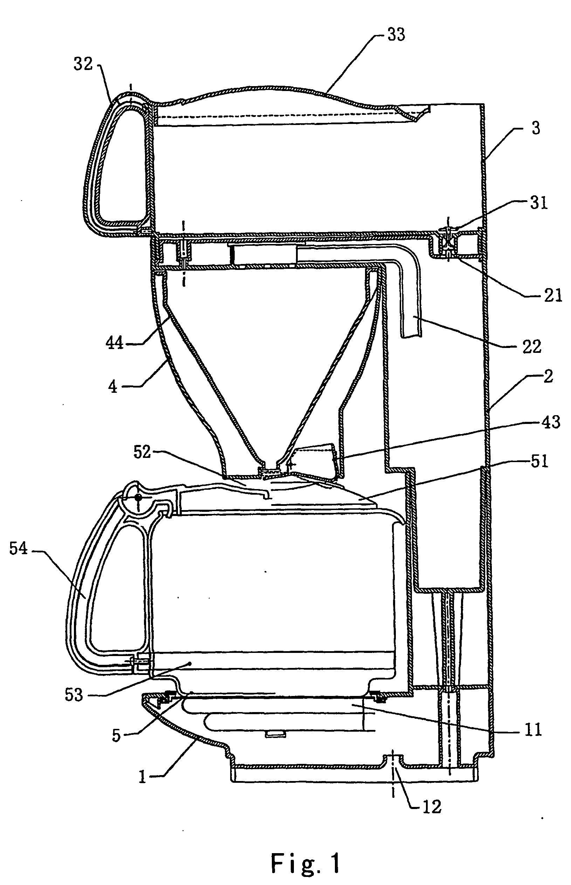

Fig. 1, is a vertical section view of the coffee maker according to the invention. As shown in Fig. 1, a water-heating container 2 is substantially fixed vertically on a side of a base 1. At the same time, a separable container 3 is on the top of the water-heating container 2. An intake 21 is provided on the top of the water-heating container 2 and a water valve 31 is provided on the bottom of the separable container 3. The water valve 31 corresponds to the intake 21 each other so that water in the separable container 3 could successfully flow into the water-heating container 2 through the water valve 31 and the intake 21. In addition, a handle 32 and a lid 33 are mounted on the sidewall of the separable container 3. A residual liquid discharge port 12 is arranged on the bottom of the base 1.

Once the separable container 3 is placed on the top of the water-heating container 2, the water valve 31 will be jacked by an ejector pin proximately in the center of the intake 21, then the water in the separable container 3 would flow down by the action of its own gravity and thereby could not be retained in the separable container 3. Therefore the water-heating container 2 needs to be fixed on the side of the base 1.

As shown in Fig. 1, a heater 11 is provided on the base 1. A coffeepot 5 is placed on the heater 21. An inlet 52 for receiving coffee droplet is set on the pot lid 51 of the coffeepot 5. The coffeepot 5 is provided with a handle 54 which is fixed on the coffeepot 5 by a ring 53 for clamping the coffeepot 5. A coffee filter casing 4 is fixed on a side of the on a side of the water-heating container 2 and is positioned above the coffeepot 5.

In the present embodiment, the coffee filter casing 4 is pivotedly mounted on the water-heating container 2 in the manner of being capable of being open and closed by a fixed side lug 41. Besides, a recess 42 for being embedded by a finger is provided on the other side corresponding to the fixed side lug 41. The coffee filter casing 4 can be opened or closed conveniently by utilizing the recess 42. A coffee stop-dropping mechanism 43 is located on the bottom of the coffee filter casing 4. During using the coffee maker, when the coffee filter casing 4 is in the state of closure, the coffee stop-dropping mechanism 43 on the bottom of the coffee filter casing 4 is exactly above the inlet 52 of the pot lid 51 of the coffeepot 5. In this case, the coffee stop-dropping mechanism 43 will be jacked by the action of the pot lid 51 of the coffeepot 5 so that coffee can flow into the coffeepot 5stop-dropping. Furthermore, a coffee filter 44 is provided in the coffee filter casing 4. In fact, the raw material-of coffee is firstly put in the coffee filter 44, and then the coffee filter 44 is placed in the coffee filter casing 4 so that it is easy to clean up the raw material of coffee in the coffee filter 44.

In addition, as can be seen from Fig. 1, a steam conduit 22 is also provided in the water-heating container 2. The water-heating container 2 is communicated with the coffee filter casing 4 via the steam conduit 22.

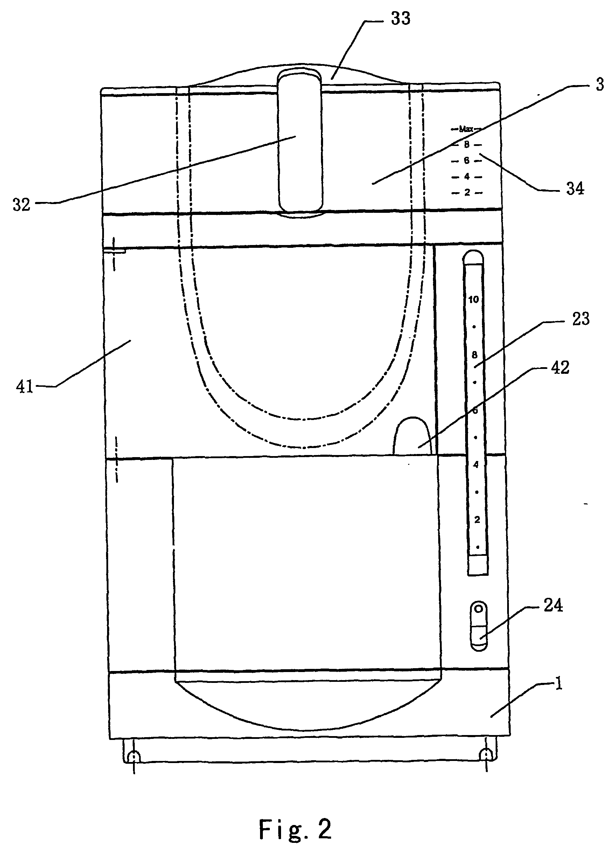

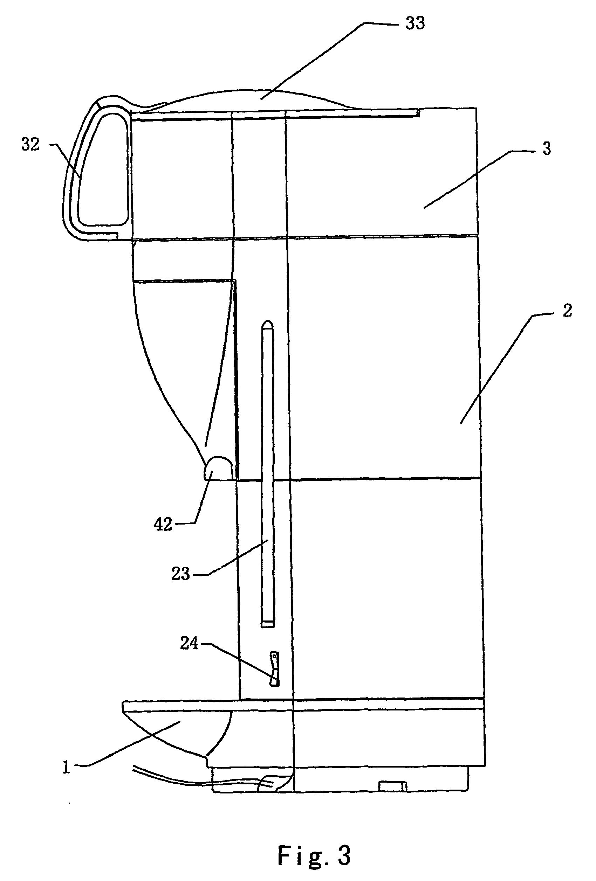

As shown in Figs. 2 and 3 a water level observing window 23 is installed on a side of the water-heating container 2. The scale 34 for the amount of water is marked on the separable container 3. In addition, it can be seen from Figs. 2 and 3 that a power switch 24 for controlling the operation of the heater 11 is provided on a side of the water-heating container 2.

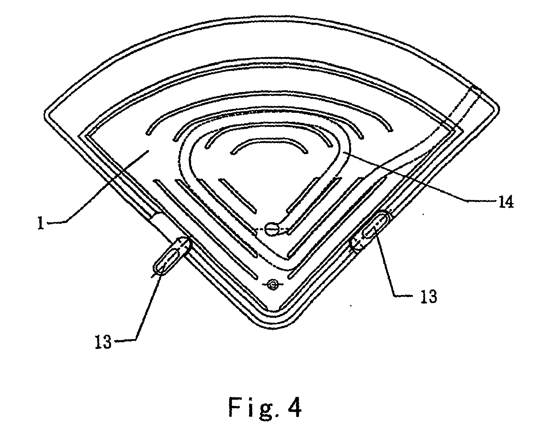

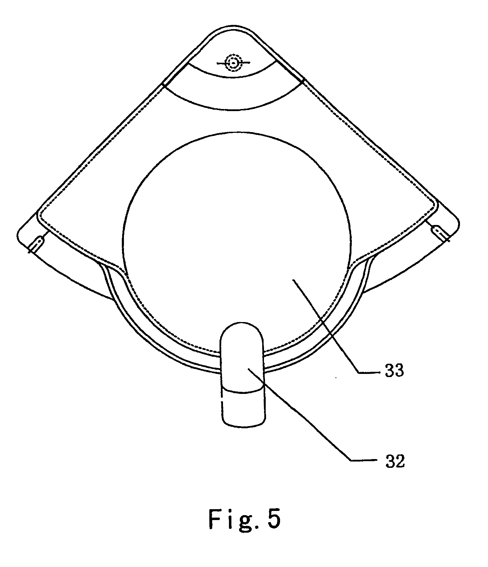

Figs. 4 and 5 are respectively the upward view and the top view of the coffee maker. The profile of the coffee maker according to the utility model appears to be a corner shape. Seen from the direction of the upward view or top view, the coffee maker appears to be a sector. As shown in Fig. 4, supporting legs 13 which can rotate outward are provided on the bottom margin of the bottom surface which is formed by two planes right-angled with each other, that is, on two right-angled bottom margins of the base 1. When the supporting legs 13 are in the state of being rotated outward, they play a role of further stably supporting the coffee maker. At the same time, it can be seen from Fig. 4 that a heat unit 14 is provided on the surface of the base 1 facing to the water-heating container 2. The heat unit 14 is used for heating the water in the water-heating container 2.

### Industry Applicability

The coffee maker according to the invention has a profile of corner shape and could be arranged at the corner of the water skip in kitchen so that the operation spaces of the water skip and the table can be saved effectively. Since the separable container is provided, water supplement for the water-heating container is convenient even if the coffee maker is placed at the corner. In addition, the handle is provided on the separable container so that it is easy to take down the separable container. Furthermore, the amount of residual water in the water-heating container and the required supplement amount of water can be determined visually and exactly since the water level observing window is mounted on a side of the water-heating container and the scale for the amount of water is marked on the separable container.

## Claims

1. A coffee maker, which comprises a base (1), a water-heating container (2), a coffee filter casing (4) and a coffeepot (5) ; wherein a heater (11) is provided on the base (1) ; the coffeepot (5) is placed on the heater (11) ; the water-heating container (2) is fixed erectly on a side of the base (2); the coffee filter casing (4) is arranged above the coffeepot (5) and mounted pivotedly on a side of the water-heating container (2) by a fixed side; the water-heating container (2) is communicated with the coffee filter casing (4) via a steam conduit (22) ; a coffee stop-dropping mechanism (43) is located on the bottom of the coffee filter casing (4); an inlet (53) for receiving coffee droplet is set on a pot lid of the coffeepot (5);
being **characterized in that**,
from the top view, the profile of the coffee maker is a sector shape with a center angle of 90° which is formed by two back surfaces of the coffee maker and the water-heating container (2) is located at a right-angled end portion (16) of the sector and a separable container (3) is provided on the top of said water-heating container (2), an intake (21) is positioned on the top of said water-heating container (2) andawatervalve (31) is provided on the bottom of said separable container (3) at a position corresponding to said intake (4).

2. The coffee maker according to claim 1, being **characterized in that** a handle (32) is provided on said separable container (3).

3. The coffee maker according to claim 1, being **characterized in that** a water level observing window (23) is installed on a side of said water-heating container (2).

4. The coffee maker according to claim 2, being **characterized in that** a water level observing window (23) is installed on a side of said water-heating container (2).

5. The coffee maker according to claim 2, being **characterized in that** a scale (34) for the amount of water is marked on the separable container (3).

6. The coffee maker according to claim 4, being **characterized in that** a scale for the amount of water (34) is marked on the separable container (3).

## Patentansprüche

1. Kaffeemaschine, umfassend einen Grundkörper (1), einen Wasseraufheizbehälter (2), ein Kaffeefiltergehäuse (4) und eine Kaffeekanne (5); wobei ein Heizelement (11) am Grundkörper (1) vorgesehen ist, die Kaffeekanne (5) auf dem Heizelement (11) plaziert ist, der Wasseraufheizbehälter (2) aufrechtstehend an einer Seite des Grundkörpers (2) angebracht ist, das Kaffeefiltergehäuse (4) über der Kaffeekanne (5) angeordnet ist und schwenkbar an einer Seite des Wasseraufheizbehälters (2) an einer feststehenden Seite montiert ist, der Wasseraufheizbehälter (2) mit dem Kaffeefiltergehäuse (4) über ein Dampfrohr (22) verbunden ist, ein Kaffee-Tropfstopmechanismus (43) am Boden des Kaffeefiltergehäuses (4) angeordnet ist, ein Einlaß (53) zum Aufnehmen der Kaffeetröpfchen auf einem Kaffeekannendeckel der Kaffeekanne (5) angebracht ist;
**dadurch gekennzeichnet, daß**
in der Draufsicht das Profil der Kaffeemaschine die Form eines Kreissektors mit einem Mittenwinkel von 90° hat, der durch zwei Rückseiten der Kaffeemaschine gebildet wird, und der Wasseraufheizbehälter (2) am rechtwinkligen Endabschnitt (16) des Kreissektors angeordnet ist, und ein abnehmbarer Behälter (3) an der Oberseite des Wasseraufheizbehälters (2) vorgesehen ist, ein Einlauf (21) am oberen Ende des Wasseraufheizbehälters (2) positioniert ist und ein Wasserabsperrventil (31) am Boden des abnehmbaren Behälters (3) vorgesehen ist, an einer Stelle, die mit dem besagten Einlauf (4) korrespondiert.

2. Kaffeemaschine nach Anspruch 1, **dadurch gekennzeichnet, daß** ein Handgriff (32) an dem abnehmbaren Behälter (3) vorgesehen ist.

3. Kaffeemaschine nach Anspruch 1, **dadurch gekennzeichnet, daß** ein Wasserstandsanzeigefenster (23) an einer Seite des Wasseraufheizbehälters (2) installiert ist.

4. Kaffeemaschine nach Anspruch 2, **dadurch gekennzeichnet, daß** ein Wasserstandsanzeigefenster (23) an einer Seite des Wasseraufheizbehälters (2) installiert ist.

5. Kaffeemaschine nach Anspruch 2, **dadurch gekennzeichnet, daß** eine Maßeinteilung (34) für die Wassermenge an dem abnehmbaren Behälter (3) markiert ist.

6. Kaffeemaschine nach Anspruch 4, **dadurch gekennzeichnet, daß** eine Maßeinteilung (34) für die Wassermenge an dem abnehmbaren Behälter (3) markiert ist.

## Revendications

1. Cafetière, laquelle comprend une base (1), un récipient chauffant l'eau (2), un boîtier pour filtre à café (4) et une verseuse à café (5) ; dans laquelle un dispositif de chauffage (11) est prévu sur la base (1) ; la verseuse à café (5) est placée sur le dispositif de chauffage (11) ; le récipient chauffant l'eau (2) est fixé verticalement sur un côté de la base (2) ; le boîtier pour filtre à café (4) est agencé au-dessus de la verseuse à café (5) et monté de façon pivotante sur un côté du récipient chauffant l'eau (2) par un côté fixe ; le récipient chauffant l'eau (2) est en communication avec le boîtier pour filtre à café (4) via un conduit de vapeur (22) ; un mécanisme anti-goutte de café (43) est situé sur la partie inférieure du boîtier pour filtre à café (4) ; une entrée (53) pour recevoir les gouttes de café est prévue sur un couvercle de la verseuse à café (5) ;
**caractérisée en ce que**,
depuis le dessus, le profil de la cafetière présente une forme à secteurs avec un angle central de 90° qui est formé par deux surfaces arrière de la cafetière et le récipient chauffant l'eau (2) est situé au niveau d'une partie d'extrémité à angle droit (16) du secteur et un récipient séparable (3) est prévu sur la partie supérieure dudit récipient chauffant l'eau (2), une admission (21) est positionnée sur la partie supérieure dudit récipient chauffant l'eau (2) et une soupape à eau (31) est prévue sur la partie inférieure dudit récipient séparable (3) au niveau d'une position correspondant à ladite admission (4).

2. Cafetière selon la revendication 1, **caractérisée en ce qu'**une poignée (32) est prévue sur ledit récipient séparable (3).

3. Cafetière selon la revendication 1, **caractérisée en ce qu'**une fenêtre d'observation du niveau d'eau (23) est installée sur un côté dudit récipient chauffant l'eau (2).

4. Cafetière selon la revendication 2, **caractérisée en ce qu'**une fenêtre d'observation du niveau d'eau (23) est installée sur un côté dudit récipient chauffant l'eau (2).

5. Cafetière selon la revendication 2, **caractérisée en ce qu'**une graduation (34) pour la quantité d'eau est marquée sur le récipient séparable (3).

6. Cafetière selon la revendication 4, **caractérisé en ce qu'**une graduation pour la quantité d'eau (34) est marquée sur le récipient séparable (3).
